# EUROPÄISCHE PATENTSCHRIFT

(11) **EP 1 424 900 B1**
(45) Veröffentlichungstag und Bekanntmachung des Hinweises auf die Patenterteilung: **26.10.2005**
(21) Anmeldenummer: 02772203.2
(22) Anmeldetag: 24.08.2002
(51) Int. Cl.: A21C 5/02

(54) **TEIGTEILMASCHINE**
DOUGH DIVIDING MACHINE
DIVISEUSE POUR PATE

(30) Priorität: 10.09.2001 DE 10144546
(43) Veröffentlichungstag der Anmeldung: 09.06.2004
(73) Patentinhaber: Werner & Pfleiderer Lebensmitteltechnik GmbH, 91550 Dinkelsbühl (DE)
(72) Erfinder: BODENSTORFER, Ferdinand, A-1160 Wien (AT)
(74) Vertreter: Rau, Albrecht
(86) Internationale Anmeldenummer: PCT/EP2002/009488
(87) Internationale Veröffentlichungsnummer: WO 2003/022057

(56) Entgegenhaltungen:
- EP-A- 0 567 730
- DE-A- 3 123 200
- DE-A- 4 408 023
- GB-A- 723 768

## Beschreibung

Die Erfindung betrifft eine Teigteilmaschine.

Teigteilmaschinen zum Portionieren von Teig in Bäckereien sind seit langem bekannt. Besondere Schwierigkeiten treten auf, wenn mit einer Teigteilmaschine Teigportionen verschiedener Masse portioniert werden sollen.

Eine derartige Maschine ist aus der EP-A-567730 bekannt.

Der Erfindung liegt die Aufgabe zugrunde, eine Teigteilmaschine zu schaffen, mit der Teigportionen verschiedener Größe leicht portioniert werden können.

Die Aufgabe wird durch die Merkmale des Anspruchs 1 gelöst. Der Kern der Erfindung besteht darin, mehrere, insbesondere zwei Zeilen von Kolben-Gehäusen übereinander vorzusehen, die wahlweise mit Teig befüllbar sind. Auf diese Weise können kleinere und größere Teigportionen mit derselben Maschine erzeugt werden. Die Feindosierung der Teigportion erfolgt durch Veränderung der Einschubtiefe des jeweiligen Meßkolbens im zugehörigen Kolben-Gehäuse.

Weitere Ausgestaltungen der Erfindung ergeben sich aus den Unteransprüchen.

Zusätzliche Merkmale und Einzelheiten der Erfindung ergeben sich aus der Beschreibung eines Ausführungsbeispieles anhand der Zeichnung. Es zeigen:
- Fig. 1: einen Vertikalschnitt durch eine erfindungsgemäße Teigteilmaschine mit einer Teig-Portionier-Einrichtung,
- Fig. 2: einen Vertikalschnitt durch die Teig-Portionier-Einrichtung gemäß Fig. 1,

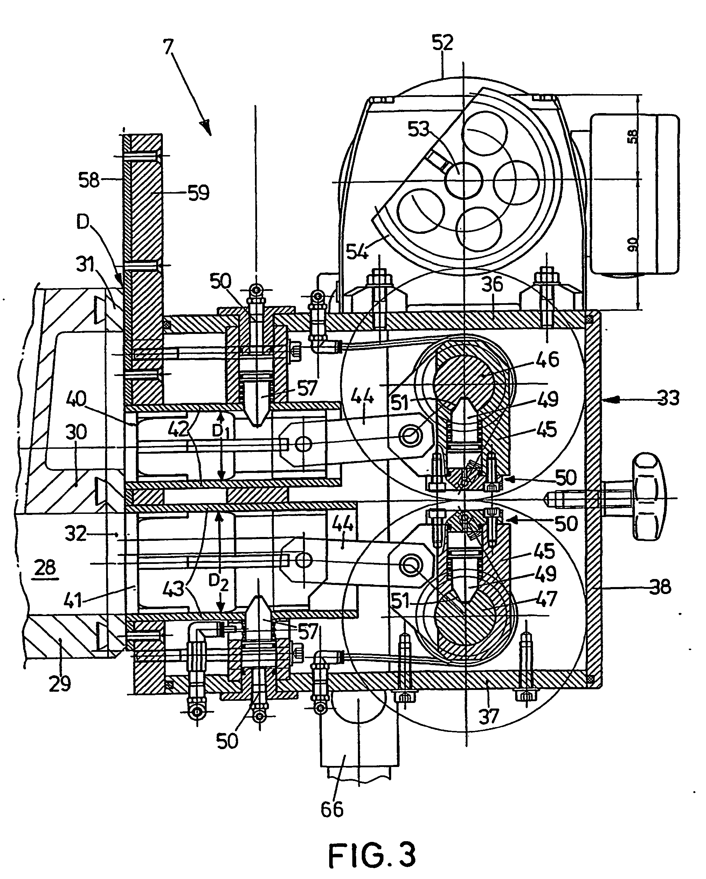

- Fig. 3: einen Vertikalschnitt durch die Teig-Portionier-Einrichtung gemäß Fig. 1,

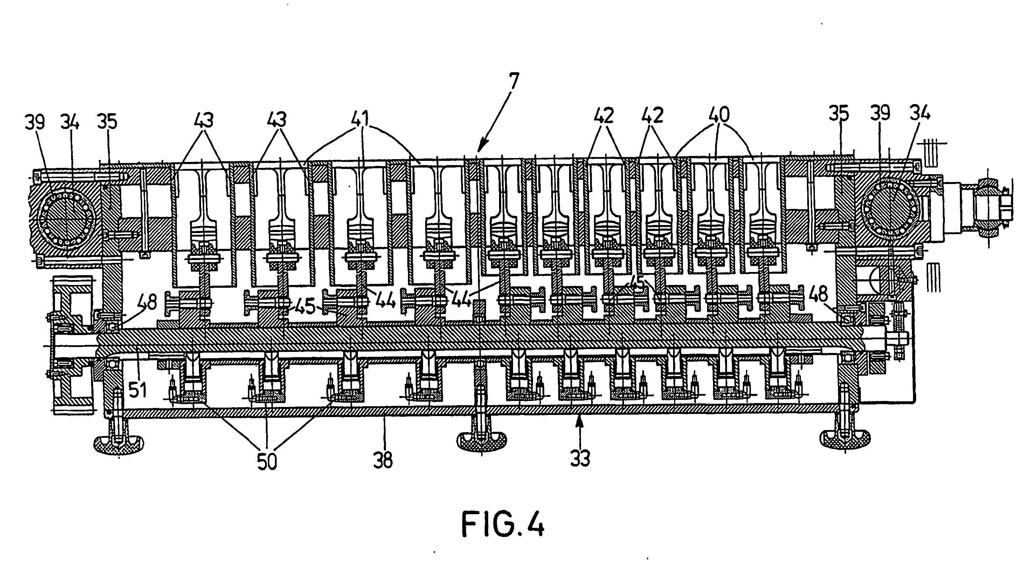

- Fig. 4: einen versetzten Horizontalschnitt durch die Teig-PortionierEinrichtung gemäß Fig. 1,

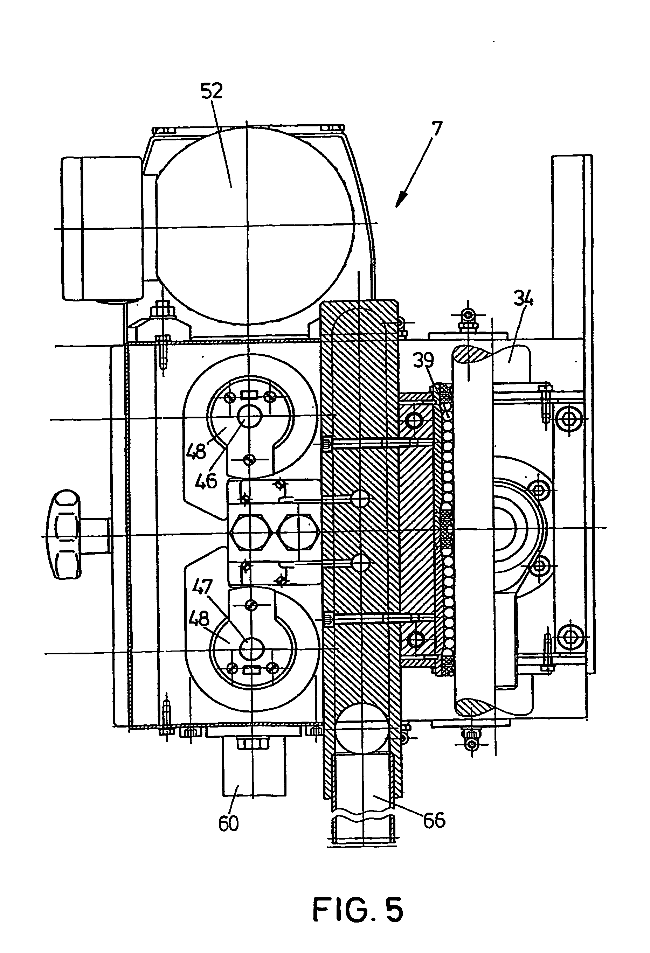

- Fig. 5: einen Schnitt gemäß der Schnittlinie V-V in Fig. 2 und

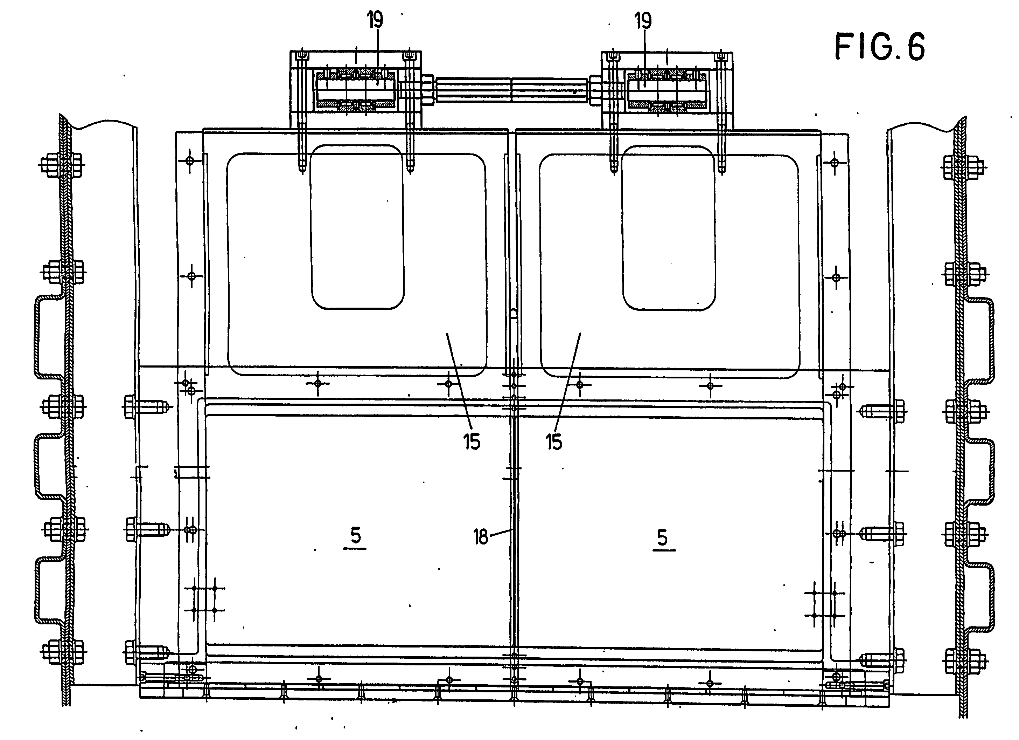

- Fig. 6: eine Draufsicht gemäß dem Sichtpfeil VI in Fig. 1.

Eine Teigteilmaschine 1 weist ein über Beine 2 abgestütztes Maschinen-Gehäuse 3 auf. Im oberen Bereich des Gehäuses 3 ist ein nach außen offener Trichter 4 mit einem Trichter-Boden 5 befestigt. Benachbart zu dem Trichter 4 ist auf der einen Seite eine Teig-Zuführ-Einrichtung 6 angeordnet. Auf der gegenüberliegenden Seite des Trichters 4 ist eine Teig-Portionier-Einrichtung 7 angeordnet, die vertikal verschiebbar ist. Unterhalb des Trichter-Bodens 5 ist ein Transport-Band 8 angeordnet, das die Teig-Portionier-Einrichtung 7 mit einer Wirk-Einrichtung 9 bekannter Art verbindet. Am unteren Ende der Wirk-Einrichtung 9 ist ein Abförder-Band 10 angeordnet, das in eine seitliche Öffnung 11 des Gehäuses 3 mündet.

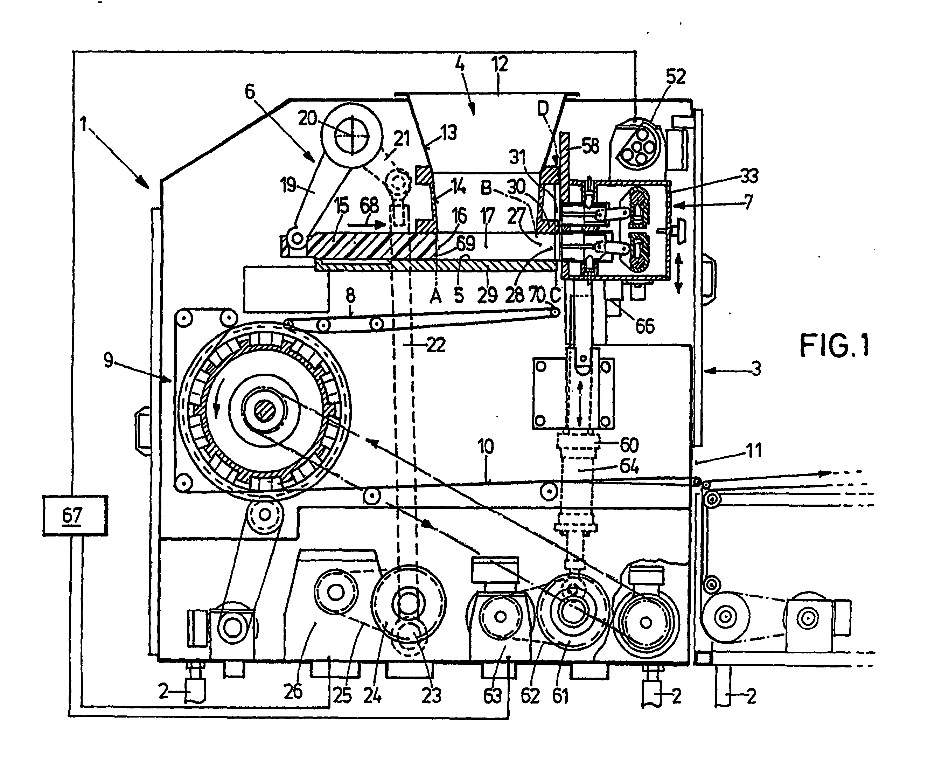

Der Trichter 4 weist eine nach außen offene Trichter-Öffnung 12 auf. Er wird durch einen oberen Trichter-Abschnitt 13 sowie einen als Gußteil ausgebildeten unteren Trichter-Abschnitt 14 gebildet, die sich beide nach unten konisch verjüngen. Der Trichter 4 wird nach unten durch den Trichter-Boden 5 abgeschlossen. Die Teig-Zuführ-Einrichtung 6 weist zwei quaderförmige Kolben 15 auf, die durch eine in Fig. 1 am linken Rand des Trichter-Bodens 5 angeordnete Öffnung 16 von einer in Fig. 1 dargestellten Außenposition A in den Boden-Raum 17 einschiebbar sind. Die Kolben 15 sind aus Kunststoff gefertigt. Die Kolben 15 sind durch eine mit dem Trichter-Boden 5 verbundene ungefähr die Höhe der Kolben 15 besitzende Trenn-Wand 18 voneinander getrennt, die gleichzeitig als Führung dient. Die Trennwand 18 endet vor dem in Fig. 1 rechten Ende des Kanals 28, insbesondere 5 mm davor. Die Kolben 15 sind an ihren äußeren, in Fig. 1 links befindlichen Enden an einem Hebel 19 angelenkt, der um eine Schwenkachse 20 verschwenkbar gelagert ist. Der Hebel 19 ist mit einem zweiten ungefähr um 90 ° versetzten Hebel-Arm 21 verbunden, der an seinem freien Ende an einer Antriebs-Stange 22 angelenkt ist. Die Antriebs-Stange 22 ist mit ihrem entgegengesetzten Ende 23 an einer Exzenter-Scheibe 24 angelenkt, die über einen Riemen-Antrieb 25 durch einen Motor 26 antreibbar ist.

Am in Fig. 1 rechten Ende des Boden-Raumes 17 ist eine der Kontur der Kolben 15 entsprechende Öffnung 27 vorgesehen, an die sich ein sich horizontal erstreckender Teig-Kanal 28 anschließt. Der Kanal 28 wird nach unten durch die Bodenplatte 29 des Trichter-Bodens 5 begrenzt. Nach oben wird der Kanal durch eine Kanal-Decke 30 begrenzt, die einteilig mit dem unteren Trichter-Abschnitt 14 ausgebildet ist. Am in Fig. 1 rechts liegenden Ende des Teig-Kanals 28 ist eine vertikal verlaufende, mit der Bodenplatte 29 und dem unteren Trichter-Abschnitt 14 fest verbundene Dichtungs-Platte 31 befestigt, die aus Kunststoff besteht. Die Dichtungs-Platte 31 weist fluchtend mit dem Teig-Kanal 28 eine Öffnung 32 auf.

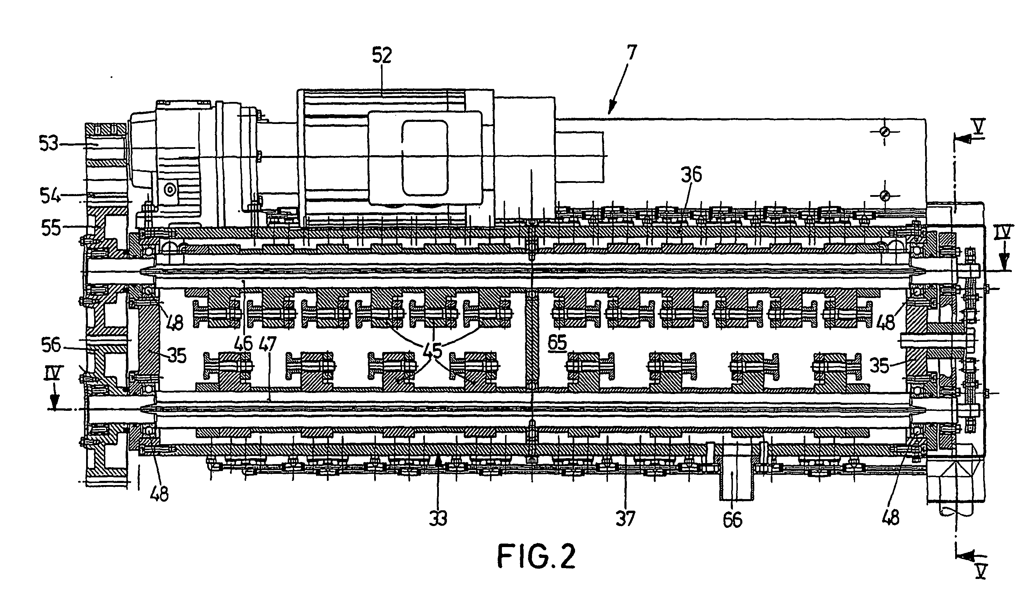

Vor der Dichtungs-Platte 31 ist die Teig-Portionier-Einrichtung 7 angeordnet. Diese weist ein Gehäuse 33 auf, das über zwei mit dem Maschinen-Gehäuse 3 verbundene, vertikal verlaufende Führungs-Stangen 34 vertikal verschiebbar geführt ist. Das Gehäuse 33 besteht aus gegenüberliegenden Seitenwänden 35, die über eine obere Längs-Wand 36, eine untere Längs-Wand 37 und eine rechte Längs-Wand 38 miteinander verbunden sind. Auf der Außenseite der Seitenwände 35 ist jeweils ein Lager 39 befestigt, in dem jeweils eine Führungs-Stange 34 geführt ist. In dem Gehäuse 33 ist eine obere Reihe horizontal verlaufender Meßkolben 40 sowie eine darunter angeordnete Reihe ebenfalls horizontal verlaufender Meßkolben 41 angeordnet. Es sind jeweils mehrere Meßkolben 40 bzw. 41 gleicher Art in einer Zeile nebeneinander angeordnet. In einer Zeile sind im vorliegenden Fall acht Meßkolben 40 und darunter ebenfalls acht Meßkolben 41 angeordnet. Die Meßkolben 40 und 41 sind in entsprechenden ringzylindrischen Kolben-Gehäusen 42 bzw. 43 verschiebbar geführt. Der Durchmesser des Kolben-Gehäuses 42 beträgt D₁. Der Durchmesser des Kolben-Gehäuses 43 beträgt D₂, wobei gilt: D₁ < D₂, insbesondere D₂/D₁ ≈ 1,5. Die Querschnittsflächen A₁ und A₂ der Kolben-Gehäuse 42 und 43 sind somit verschieden. Am hinteren Ende jedes Kolbens 40 und 41 ist ein Pleuel 44 angelenkt, das mit seinem anderen Ende über einen Mitnehmer 45 mit einer Antriebs-Welle 46 bzw. 47 verbunden ist. Die Wellen 46 und 47 sind an ihren längsseitigen Enden in Lagern 48 gelagert. Jeder Mitnehmer 45 ist auf der Welle 46 bzw. 47 drehbar gelagert und weist einen verschiebbar geführten Arretier-Zapfen 49 auf, der durch eine pneumatische Verriegelungs-Einheit 50 mit einer Längsnut 51 in der Welle 46 bzw. 47 in Eingriff bringbar ist. Befindet sich der Arretier-Zapfen 49 in Eingriff mit der Längsnut 51, so ist der Mitnehmer 45 in Drehmoment-übertragender Weise mit der Welle 46 bzw. 47 verbunden. Auf der Längs-Wand 36 ist ein Servo-Getriebe-Motor 52 befestigt, dessen Welle 53 mit einer Zahnscheibe 54 verbunden ist. Die Wellen 46 und 47 weisen an ihrem in Fig. 2 linken Ende Zahnräder 55 bzw. 56 auf, wobei das Zahnrad 55 mit der Zahnscheibe 54 in Eingriff ist und das Zahnrad 55 mit dem Zahnrad 56 in Eingriff ist, so daß der Motor 52 beide Wellen gleichzeitig und gegenläufig antreibt. Die Meßkolben 40 und 41 sind in den Gehäusen 42 bzw. 43 durch in deren Innenraum pneumatisch einschiebbare Arretier-Zapfen 57 verriegelbar. Oberhalb der oberen Reihe von Meßkolben 40 ist eine sich über die volle Breite der Einrichtung 7 erstreckende Schneidplatte 58 mit dem Gehäuse 33 verbunden, die vertikal verläuft und aus Edelstahl besteht. Die Schneidplatte 58 ist an einer mit dem Gehäuse 33 verbundenen Trägerplatte 59 angeschraubt und fluchtet mit den äußeren Enden der Kolben-Gehäuse 42 und 43.

Das Gehäuse 33 ist an der Unterseite an einer Teleskop-Stange 60 angelenkt. Das entgegengesetzte untere Ende der Teleskop-Stange 60 ist an einer Exzenter-Scheibe 61 angelenkt, die über einen Riementrieb 62 mit einem Motor 63 verbunden ist. Die Teleskop-Stange 60 weist eine Kolben-Zylinder-Einheit 64 auf, durch die die Länge der Teleskop-Stange 60 veränderbar ist. Am unteren Ende des Gehäuses 33 ist ein mit dem Innenraum 65 des Gehäuses verbundener Anschluß-Stutzen 66 vorgesehen, der mit einer Saugeinrichtung verbunden ist, wodurch im Dichtungsbereich D ein Unterdruck erzeugt werden kann. Die Motoren 26, 52 und 63 sind mit einer gemeinsamen Steuer-Einrichtung 67 verbunden.

Im folgenden wird die Funktionsweise der Teigteilmaschine beschrieben. Von oben wird Teig durch die Trichter-Öffnung 12 in den Trichter 4 eingebracht. Die Kolben 15 bewegen sich angetrieben durch den Motor 26, den Riemen-Antrieb 25, über die Exzenter-Scheibe 24, die Antriebs-Stange 22, den Hebel-Arm 21 und den Hebel 29 entlang einer Einschub-Richtung 68. In Fig. 1 sind die Kolben 15 in der am weitesten ausgeschobenen Position A des vorderen Endes der Kolben 15 dargestellt. Im Anschluß daran bewegt sich der Kolben 15 durch den auf dem Trichter-Boden 5 liegenden Teig zur Position B unmittelbar am Beginn des Teig-Kanals 28. Der Teig kann zum Teil nach oben ausweichen. Im Anschluß daran wird der Kolben 15 bis zu einer Position C in den jeweiligen Kanal 28 eingeschoben, wobei sich vor dem vorderen Ende 69 des Kolbens 15 eine bestimmte portionierte Teigmenge befindet. Durch die vor dem Ende des Kanals 28 endende Trennwand 18 kann ein Druckausgleich der eingeschobenen Teigmenge über die volle Breie des Teig-Kanals 28 erfolgen. Gleichzeitig mit dem Einschieben der Kolben 15 von der Position B zu Position C werden die Meßkolben 41 eingefahren, wodurch der Teig in die nebeneinander liegenden Kolben-Gehäuse 43 eingeschoben bzw. eingesaugt wird. Die Gewichtung, ob das Einschieben oder das Einsaugen im Vordergrund steht, erfolgt in Abhängigkeit von der Art des Teiges. Es kann sowohl ein reines Einschieben als auch ein im wesentlichen reines Einsaugen erfolgen. Für das Einschieben der Meßkolben 41 verschwenkt der Motor 52 die Zahnscheibe 54 und damit die Zahnräder 55 und 56, wodurch die Antriebswelle 47 verschwenkt wird. Die Arretier-Zapfen 49 des mit dem Meßkolbens 41 verbundenen Mitnehmers 45 befinden sich in Eingriff mit der Nut 51, so daß eine Verschwenkung der Welle 47 zu einer Linearverschiebung des Meßkolbens 41 führt. Durch die einzeln ansteuerbaren Verriegelungs-Einheiten 50 können einzelne Meßkolben 41 an die Welle 47 angekoppelt werden, wenn nicht alle Meßkolben 41 benötigt werden. Um sicherzustellen, daß die Meßkolben 41 nicht aufgrund der Reibung zwischen der Welle 47 und dem Mitnehmer 45 angetrieben werden, sind die nicht benötigten Meßkolben 41 jeweils durch einen Arretier-Zapfen 57 arretiert. Die in das Kolben-Gehäuse 43 eingeschobene Teigmenge kann durch den Verschwenkwinkel der Welle 47 und die damit verbundene Einschubtiefe des Meßkolbens 41 eingestellt werden. Dies wird vom Servo-Getriebe-Motor 52 nach Vorgaben der Steuer-Einrichtung 67 erreicht. Aufgrund des durch den Anschluß-Stutzen 66 zugeführten Unterdrucks im Dichtbereich D zwischen der Dichtungs-Platte 31 und den äußeren Ende der Kolben-Gehäuse 42 und 43, wird die beim Dosieren enthaltene Luft abgesaugt.

Im Anschluß an das Befüllen der Kolben-Gehäuse 43 mit der gewünschten Teigmenge wird das Gehäuse 33 geführt durch die Führungs-Stangen 34, angetrieben durch den Motor 63, den Riementrieb 62, über die Exzenter-Scheibe 61 und die Teleskop-Stange 60 nach unten verschoben, bis das äußere Ende der Kolben-Gehäuse 43 das rechte Ende 70 des TransportBandes 8 erreicht. Im Anschluß daran wird der Motor 52 in eine gegenläufige Drehung versetzt, wodurch die Meßkolben 41 die einzelnen Teigportionen auf das Transport-Band 8 schieben. Das Transport-Band 8 führt die Teigportionen der Wirk-Einrichtung 9 zu, in der diese durchgewirkt werden. Im Anschluß daran werden die Teigportionen auf das Abförder-Band 10 gegeben und nach außen abgeführt. Im Anschluß an das Entleeren der Kolben-Gehäuse 43 wird das Gehäuse 33 wieder in die in Fig. 1 gezeigte Position gefahren und erneut mit deren Befüllung begonnen.

Sollen Teigportionen kleinerer Größe portioniert werden, so wird die Kolben-Zylinder-Einheit 64 durch die Steuer-Einrichtung 67 angesteuert und die Länge der Teleskop-Stange 60 reduziert, bis die Kolben-Gehäuse 42 vor der Mündung des Teig-Kanals 28 zuliegen kommen. Deren Befüllung erfolgt wie die Befüllung der Kolben-Gehäuse 43. Auch bei den Meßkolben 40 besteht die Möglichkeit, daß diese selektiv an die Antriebs-Welle 46 gekoppelt werden und insofern beim Betrieb nicht zwingend alle Meßkolben 40 verschoben werden. Die Wahl, ob die Zeile der Meßkolben 40 oder der Meßkolben 41 befüllt wird, kann vom Bedienungspersonal über die Steuer-Einrichtung 67 vorgegeben werden. Es ist möglich, auch noch weitere Zeilen von Meßkolben, d. h. z. B. drei Zeilen von Meßkolben übereinander vorzusehen, wenn ein noch größerer Gewichtsbereich für die Teigportionen abgedeckt werden soll. Durch die verschiedenen Durchmesser der Kolbengehäuse 42 und 43 sowie die verschiedene Einschubtiefe der Meßkolben 40 und 41 darin, kann beispielsweise ein Gewichtsbereich je Teigportion von 30 g bis 350 g abgedeckt werden. Eine weitere Aufweitung dieses Intervalls ist möglich. Es ist ferner möglich, mehr als acht Meßkolben, z. B. 12 Meßkolben nebeneinander vorzusehen. Bei acht Meßkolben je Zeile und einer Frequenz von 3000 Hüben/h ergibt sich eine Produktion von 24.000 Stück/h. Bei 12 Meßkolben pro Zeile ergibt sich sogar eine Produktion von 36.000 Stück/h. Durch die selektive Inaktivierbarkeit einzelner Meßkolben 40 und 41 nach Vorgabe des Bedieners kann der Durchsatz beliebig reduziert werden. Von besonderer Bedeutung ist die Ausbildung der Teilungs-Einrichtung, die durch das Zusammenwirken der Schneidplatte 58 und der Dichtungs-Platte 31 gebildet wird. Die geschliffene Schneidplatte 58, die aus Edelstahl ist, läuft ohne Spiel gegen die auswechselbare und somit leicht erneuerbare Dichtungs-Platte 31 aus Kunststoff. Anders als bei einer Dichtungs-Platte aus Metall braucht kein Spiel vorgesehen sein, so daß eine sehr viel bessere Abdichtung erreicht wird und der im Dichtungsabschnitt D austretende Teig minimiert wird.

## Patentansprüche

1. Teigteilmaschine
a. mit einem Maschinen-Gehäuse (3),
b. mit einem an dem Maschinen-Gehäuse (3) befestigten Teig-Aufnahme-Behälter (4) zur Aufnahme von zu portionierendem Teig,
c. mit einer mit dem Teig-Aufnahme-Behälter (4) verbundenen Teig-Zuführ-Einrichtung (6) mit mindestens einem angetrieben Förder-Kolben (15) zum Herausfördern von Teig aus dem Teig-Außuhme-Behälter (4) und
d. mit einer Teig-Portionier-Einrichtung (7), und mit einer Teig-Abführ-Einrichtung zur Aufnahme und Abführung von portioniertem Teig aus der Teig-Portionier-Einrichtung (7).
**dadurch gekennzeichnet, dass** die Teig Portionier Einrichtung (7)
i. eine erste Zeile von in ersten Kolben-Gehäusen (42) angetrieben verschiebbaren ersten Meßkolben (40) zur Aufnahme von Teig von der Teig-Zuführ-Einrichtung (6) und
ii. mindestens eine zweite Zeile von in zweiten Kolben-Gehäusen (43) angetrieben verschiebbaren zweiten Meßkolben (41) zur Aufnahme von Teig von der Teig-Zuführ-Einrichtung (6) aufweist,
iii. wobei die ersten Kolben-Gehäuse (42) eine Querschnittsfläche A₁ und die zweiten Kolben-Gehäuse (43) eine Querschnittsfläche A₂ aufweisen, so daß A₁ verschieden von A₂ ist,
e. wobei die Teig-Portionier-Einrichtung (7) derart verschiebbar ist, daß Teig von dem mindestens einen Förder-Kolben (15) alternativ nur den ersten Kolben-Gehäusen (42) oder den mindestens zweiten Kolben-Gehäusen (43) zuführbar ist.

2. Teigteilmaschine gemäß Anspruch 1, **dadurch gekennzeichnet, daß** die ersten Kolben-Gehäuse (42) und die zweiten Kolben-Gehäuse (43) einen kreisförmigen Querschnitt mit einem ersten Durchmesser D₁ bzw. einem zweiten Durchmesser D₂ aufweisen.

3. Teigteilmaschine gemäß Anspruch 2, **dadurch gekennzeichnet, daß** für die Durchmesser gilt: D₁ < D₂.

4. Teigteilmaschine gemäß einem der vorangehenden Ansprüche, **dadurch gekennzeichnet, daß** in der ersten Zeile und/oder in der zweiten Zeile mehrere Kolben-Gehäuse (42, 43), insbesondere acht oder zwölf Kolben-Gehäuse (42, 43) angeordnet sind.

5. Teigteilmaschine gemäß einem der vorangehenden Ansprüche, **dadurch gekennzeichnet, daß** die Teig-Portionier-Einrichtung (7) ein vertikal geführt verschiebbares Gehäuse (33) aufweist.

6. Teigteilmaschine gemäß Anspruch 5, **dadurch gekennzeichnet, daß** das Gehäuse (33) über einen Exzenter-Antrieb vertikal auf und ab verschiebbar ist.

7. Teigteilmaschine gemäß Anspruch 6, **dadurch gekennzeichnet, daß** das Gehäuse (33) mit dem Exzenter-Antrieb über eine längenverstellbare Teleskop-Stange (60) verbunden ist.

8. Teigteilmaschine gemäß einem der vorangehenden Ansprüche, **dadurch gekennzeichnet, daß** die Teig-Portionier-Einrichtung (7) einen Antrieb mit zugehörigen Antriebs-Wellen (46, 47) aufweist.

9. Teigteilmaschine gemäß Anspruch 8, **dadurch gekennzeichnet, daß** die ersten Meßkolben (40) und/oder zweiten Meßkolben (41) selektiv mit einer der Antriebs-Wellen (46 bzw. 47) zur Drehmomentenübertragung in Eingriff bringbar sind.

10. Teigteilmaschine gemäß einem der vorangehenden Ansprüche, **dadurch gekennzeichnet, daß** die Teig-Portionier-Einrichtung (7) eine mit dieser verbundene Schneidplatte (58) aufweist, die mit einer mit dem Teig-Aufnahme-Behälter (4) verbundenen Dichtungs-Platte (31) zusammenwirkt.

## Claims

1. A dough divider, comprising
a. a machine housing (3);
b. a dough collecting container (4) which is mounted on the machine housing (3), receiving dough that is to be metered;
c. a dough delivery arrangement (6) which is connected to the dough collecting container (4), having at least one driven delivery piston (15) for delivering of dough from the dough collecting container (4); and
d. a dough metering arrangement (7) and a dough discharge arrangement for receiving and discharging metered dough from the dough metering arrangement (7),
**characterized in that** the dough metering arrangement (7) comprises
i. a first row of first measuring pistons (40), which are displaceably driven in first piston casings (42), taking dough from the dough delivery arrangement (6), and
ii. at least a second row of second measuring pistons (41), which are displaceably driven in second piston casings (43), taking dough from the dough delivery arrangement (6), wherein
iii. the first piston casings (42) have a cross-sectional area A₁ and the second piston casings (43) have a cross-sectional area A₂ so that A₁ differs from A₂;
e. the dough metering arrangement (7) being displaceable such that dough is deliverable by the at least one delivery piston (15) alternatively to the first piston casings (42) or to the at least second piston casings (43).

2. A dough divider according to claim 1, **characterized in that** the first piston casings (42) and the second piston casings (43) have a circular cross-section of a first diameter D₁ and a second diameter D₂, respectively.

3. A dough divider according to claim 2, **characterized in that** D₁ < D₂ applies to the diameters.

4. A dough divider according to one of the preceding claims, **characterized in that** several piston casings (42, 43), in particular eight or twelve piston casings (42, 43), are disposed in the first row and/or in the second row.

5. A dough divider according to one of the preceding claims, **characterized in that** the dough metering arrangement (7) comprises a casing (33) that is guided for vertical displacement.

6. A dough divider according to claim 5, **characterized in that** the casing (33) is displaceable vertically up and down by a cam drive.

7. A dough divider according to claim 6, **characterized in that** the casing (33) is connected to the cam drive via an adjustable-length telescopic rod (60).

8. A dough divider according to one of the preceding claims, **characterized in that** the dough metering arrangement (7) comprises a drive with associated drive shafts (46, 47).

9. A dough divider according to claim 8, **characterized in that** the first measuring pistons (40) and/or the second measuring pistons (41) are selectively engageable with one of the drive shafts (46 and 47, respectively) for torque transmission.

10. A dough divider according to one of the preceding claims, **characterized in that** the dough metering arrangement (7) comprises a cutter plate (58), which is connected thereto, co-operating with a sealing plate (31), which is connected to the dough collecting container (4).

## Revendications

1. Diviseuse pour pâte
a. avec un corps de machine (3),
b. avec un récipient à pâte (4) fixé au corps de machine (3) et destiné à recevoir la pâte à diviser,
c. avec un dispositif d'alimentation en pâte (6) relié au récipient à pâte (4), possédant au moins un piston d'extraction (15) entraîné pour extraire la pâte du récipient à pâte (4) et
d. avec un dispositif de division de la pâte (7) et avec un dispositif d'évacuation destiné à recevoir la pâte divisée et à l'évacuer du dispositif de division (7),
**caractérisée en ce que** le dispositif de division de la pâte (7) possède
i. une première rangée de premiers pistons doseurs (40) mobiles entraînés dans des premiers corps de piston (42) et destinés à recevoir de la pâte provenant du dispositif d'alimentation en pâte (6) et
ii. au moins une deuxième rangée de seconds pistons doseurs (41) mobiles entraînés dans des seconds corps de piston (43) et destinés à recevoir de la pâte provenant du dispositif d'alimentation en pâte (6),
iii. les premiers corps de piston (42) ayant une aire de section A₁ et les seconds corps de piston (43) une aire de section A₂, telles que A₁ est différente de A₂, et
e. le dispositif de division de pâte (7) est mobile de telle sorte que de la pâte puisse être amenée par le au moins un piston d'extraction (15) alternativement soit seulement aux premiers corps de piston (42), soit aux seconds corps de piston (43) au moins.

2. Diviseuse pour pâte selon la revendication 1, **caractérisée en ce que** les premiers corps de piston (42) et les seconds corps de piston (43) ont une section circulaire avec respectivement un premier diamètre D₁ et un second diamètre D₂.

3. Diviseuse pour pâte selon la revendication 2, **caractérisée en ce que** les diamètres sont tels que D₁ < D₂.

4. Diviseuse pour pâte selon l'une quelconque des revendications précédentes, **caractérisée en ce que** plusieurs corps de piston (42, 43), en particulier huit ou douze corps de piston (42, 43), sont prévus dans la première rangée et/ou la seconde rangée.

5. Diviseuse pour pâte selon l'une quelconque des revendications précédentes, **caractérisée en ce que** le dispositif de division de pâte (7) possède un corps (33) mobile guidé verticalement.

6. Diviseuse pour pâte selon la revendication 5, **caractérisée en ce que** le corps (33) est mobile verticalement vers le haut et le bas, à l'aide d'un entraînement à excentrique.

7. Diviseuse pour pâte selon la revendication 6, **caractérisée en ce que** le corps (33) est relié à l'entraînement à excentrique par une tige télescopique (60) de longueur ajustable.

8. Diviseuse pour pâte selon l'une quelconque des revendications précédentes, **caractérisée en ce que** le dispositif de division de pâte (7) possède un entraînement avec des arbres d'entraînement (46, 47) correspondants.

9. Diviseuse pour pâte selon la revendication 8, **caractérisée en ce que** les premiers pistons doseurs (40) et/ou les seconds pistons doseurs (41) peuvent être sélectivement mis en prise avec l'un des arbres d'entraînement (46 ou 47) pour la transmission du couple.

10. Diviseuse pour pâte selon l'une quelconque des revendications précédentes, **caractérisée en ce que** le dispositif de division de pâte (7) possède une plaque de coupe (58) qui lui est liée, qui coopère avec une plaque d'étanchéité (31) reliée au récipient à pâte (4).
